**Europäisches Patentamt**

**European Patent Office**

**Office européen des brevets**

(19)

(11)  **EP 0 641 261 B1**

(12)  ## EUROPÄISCHE PATENTSCHRIFT

(45) Veröffentlichungstag und Bekanntmachung des Hinweises auf die Patenterteilung:
**08.01.1997 Patentblatt 1997/02**

(21) Anmeldenummer: **93909980.0**

(22) Anmeldetag: **13.05.1993**

(51) Int. Cl.⁶: **B05D 7/16**, B05D 7/26, C09D 133/00, B05D 3/02

(86) Internationale Anmeldenummer:
**PCT/EP93/01196**

(87) Internationale Veröffentlichungsnummer:
**WO 93/23177 (25.11.1993 Gazette 1993/28)**

(54) **VERFAHREN ZUR HERSTELLUNG EINER ZWEISCHICHTIGEN LACKIERUNG UND FÜR DIESES VERFAHREN GEEIGNETE WÄSSRIGE LACKE**

PROCESS FOR TWO-LAYER LACQUERING AND SUITABLE LACQUERS THEREFOR

PROCEDE POUR L'OBTENTION D'UN VERNISSAGE EN DEUX COUCHES ET VERNIS AQUEUX UTILISE POUR CE PROCEDE

(84) Benannte Vertragsstaaten:
**AT BE CH DE DK ES FR GB IT LI NL SE**

(30) Priorität: **20.05.1992 DE 4216613**

(43) Veröffentlichungstag der Anmeldung:
**08.03.1995 Patentblatt 1995/10**

(73) Patentinhaber: **BASF Lacke + Farben AG
48165 Münster-Hiltrup (DE)**

(72) Erfinder:
• **WIEDITZ, Stefan
Sylvania, OH 43560 (US)**
• **RINK, Heinz-Peter
D-4400 Münster (DE)**
• **PIONTEK, Susanne
D-4400 Münster (DE)**
• **PEITZ, Birgit
D-4400 Münster (DE)**
• **LETTMANN, Bernhard
D-4400 Münster (DE)**
• **GAST, Achim
D-4400 Münster (DE)**

(56) Entgegenhaltungen:
**EP-A- 0 038 127       EP-A- 0 089 497
EP-A- 0 107 300       EP-A- 0 195 931
DE-A- 3 628 124       DE-A- 3 841 540
DE-A- 3 915 459       DE-A- 3 942 804
US-A- 4 719 132**

**Beschreibung**

Die Erfindung betrifft ein Verfahren zur Herstellung einer zweischichtigen Lackierung auf einer Substratoberfläche, bei dem

(1) ein pigmentierter wäßriger Basislack, der ein wasserverdünnbares Emulsionspolymer als Bindemittel enthält, auf die Substratoberfläche aufgebracht wird

(2) aus dem in Stufe (1) aufgebrachten Basislack ein Polymerfilm gebildet wird

(3) auf der so erhaltenen Basisschicht ein transparenter Decklack aufgebracht wird und anschließend

(4) Basisschicht und Deckschicht zusammen eingebrannt werden.

Die Erfindung betrifft auch für dieses Verfahren geeignete wäßrige Lacke.

Das oben beschriebene Verfahren zur Herstellung von zweischichtigen Lackierungen ist bekannt und wird vor allem zur Herstellung von Decklackierungen, insbesondere zur Herstellung von Metalleffektlackierungen auf Automobilkarosserien eingesetzt (vgl. z.B. DE-A-38 41 540, EP-A-287 144, DE-A-36 28 124, EP-A-195 931 und EP-A-256 549).

Der optische Eindruck der nach dem in Rede stehenden verfahren hergestellten Zweischichtlackierungen hängt sehr stark von der räumlichen verteilung und der räumlichen Orientierung der im Basislack enthaltenen Pigmente ab. Das gilt insbesondere für Metalleffektlackierungen. Je höher der Anteil der im Basislack enthaltenen plättchenförmigen Metallpigmentteilchen (insbesondere Aluminiumpigmentteilchen) ist, der in paralleler Ausrichtung zur Substratoberfläche vorliegt, desto ausgeprägter ist der Metalleffekt. Die räumliche Verteilung und Orientierung der im Basislack enthaltenen Pigmente kann insbesondere nach dem Aufbringen des transparenten Decklackes und/oder während des Einbrennvorgangs gestört werden.

Die der vorliegenden Erfindung zugrundeliegende Aufgabenstellung besteht in der Bereitstellung eines Verfahrens der oben beschriebenen Art, mit dem zweischichtigen Lackierungen erhältlich sind, deren optischer Eindruck, insbesondere Metalleffekt gegenüber dem Stand der Technik verbessert ist.

Diese Aufgabe wird überraschenderweise dadurch gelöst, daß in Stufe (1) des Verfahrens zur Herstellung der zweischichtigen Lackierung ein pigmentierter Basislack eingesetzt wird, der als Bindemittel ein Emulsionspolymer enthält, das erhältlich ist, indem ein Gemisch aus

(a) 45 bis 99 Gew.-%, vorzugsweise 75 bis 90 Gew.-% eines cycloaliphatischen oder aliphatischen, hydroxyl-, carboxyl- und sulfonsäuregruppenfreien Esters der Methacrylsäure oder Acrylsäure oder eines Gemisches aus solchen Estern

(b) 1 bis 20 Gew.-%, vorzugsweise 5 bis 15 Gew.-% eines mindestens eine Hydroxylgruppe pro Molekül tragenden ethylenisch ungesättigten Monomers oder eines Gemisches aus solchen Monomeren

(c) 0 bis 10 Gew.-%, vorzugsweise 2 bis 6 Gew.-% eines mindestens eine Carboxyl- oder mindestens eine Sulfonsäuregruppe pro Molekül tragenden ethylenisch ungesättigten Monomers oder eines Gemisches aus solchen Monomeren und

(d) 0 bis 25 Gew.-%, vorzugsweise 2 bis 15 Gew.-% eines weiteren, von (a), (b) und (c) verschiedenen ethylenisch ungesättigten Monomers oder eines Gemisches aus solchen Monomeren,

wobei die Summe der Gewichtsanteile von (a), (b), (c) und (d) stets 100 Gew.-% ergibt, in wäßriger Phase in Gegenwart eines Umsetzungsproduktes (A) und eines oder mehrerer Emulgatoren radikalisch polymerisiert wird, wobei das Umsetzungsprodukt (A) erhältlich ist, indem

(i) ein Butadienhomo- oder copolymer

(ii) mindestens eine Fettsäure eines trocknenden Öles und/oder mindestens ein trocknendes Öl und

(iii) Maleinsäureanhydrid

in einem Massenverhältnis von (i) : (ii) : (iii) = 1,0 : 0,1 bis 0,6 : 0,1 bis 0,6 umgesetzt werden und das Reaktionsprodukt nach Zugabe einer basischen wäßrigen Lösung in eine wäßrige Dispersion überführt wird.

Das in dem erfindungsgemäß eingesetzten Basislack enthaltenen Emulsionspolymer ist durch eine an sich bekannte Emulsionspolymerisation herstellbar. Dabei wird die Monomerenmischung aus (a), (b), (c) und (d) in einem wäßrigen Medium in Gegenwart eines oder mehrerer Emulgatoren und eines oder mehrerer radikalbildender Initiatoren polymerisiert. Es ist nun erfindungswesentlich, daß diese radikalische Emulsionspolymerisation in Gegenwart des unten näher beschriebenen Umsetzungsproduktes (A) durchgeführt wird.

Die Emulsionspolymerisation kann durchgeführt werden, indem Wasser, Emulgator und ein Teil des Initiators vorgelegt werden und das Monomerengemisch und getrennt davon, aber parallel dazu der Rest des Initiators bei der Polymerisationstemperatur (im allgemeinen 20 bis 100°C, vorzugsweise 40 bis 90°C) langsam zugegeben werden. Es ist auch möglich, einen Teil des Wassers und des Emulgators vorzulegen und eine Voremulsion, die aus dem Rest des Wassers, dem Rest des Emulgators und dem Monomerengemisch hergestellt worden ist und getrennt davon, aber parallel dazu den Initiator bei der Reaktionstemperatur langsam zuzugeben. Dabei ist es bevorzugt, zunächst einmal einen Teil der Voremulsion (vorzugsweise etwa 30 Gew.-% der insgesamt einzusetzenden Menge an Voremulsion) zusammen mit einer entsprechenden Teilmenge des Initiators zuzugeben, ein Saatpolymer herzustellen und danach den Rest der Voremulsion und den Rest des Initiators zuzugeben und die Polymerisation zum Ende zu bringen.

Es ist bevorzugt, die Monomerenmischung in zwei Stufen zu polymerisieren (vgl. DE-A-38 41 540). Dabei wird in einer ersten Stufe ein Gemisch aus

(a1) 10 bis 90 Gew.-%, vorzugsweise 35 bis 75 Gew.-% der insgesamt einzusetzenden Menge an Komponente (a)

(b1) 0 bis 90 Gew.-%, vorzugsweise 0 Gew.-% der insgesamt einzusetzenden Menge an Komponente (b)

(c1) 0 bis 90 Gew.-%, vorzugsweise 0 Gew.-%, der insgesamt einzusetzenden Menge an Komponente (c) und

(d1) 0 bis 90 Gew.-%, vorzugsweise 25 bis 65 Gew.-% der insgesamt einzusetzenden Menge an Komponente (d)

in wäßriger Phase in Gegenwart des Umsetzungsproduktes (A) und eines oder mehrerer Emulgatoren radikalisch polymerisiert und nachdem mindestens 80 Gew.-% der aus (a1), (b1), (c1) und (d1) bestehenden Mischung umgesetzt worden sind in einer zweiten Stufe ein Gemisch aus

(a2) 90 bis 10 Gew.-%, vorzugsweise 75 bis 35 Gew.-% der insgesamt einzusetzenden Menge an Komponente (a)

(b2) 100 bis 10 Gew.-%, vorzugsweise 100 Gew.-% der insgesamt einzusetzenden Menge an Komponente (b)

(c2) 100 bis 10 Gew.-%, vorzugsweise 100 Gew.-% der insgesamt einzusetzenden Menge an Komponente (c) und

(d2) 100 bis 10 Gew.-%, vorzugsweise 65 bis 25 Gew.-% der insgesamt einzusetzenden Menge an Komponente (d)

in wäßriger Phase in Gegenwart des in der ersten Stufe erhaltenen Polymers radikalisch polymerisiert.

Bevorzugte Emulsionspolymere werden erhalten, wenn das in der ersten Stufe eingesetzte Monomer bzw. Monomerengemisch so ausgewählt wird, daß bei völliger Auspolymerisation des in der ersten Stufe eingesetzten Monomers bzw. Monomerengemisches ein Polymer mit einer Glasübergangstemperatur ($T_{G1}$) von + 30°C bis + 110°C, vorzugsweise + 60°C bis + 95°C erhalten wird und das in der zweiten Stufe eingesetzte Monomer bzw. Monomerengemisch so ausgewählt wird, daß eine alleinige Polymerisation des in der zweiten Stufe eingesetzten Monomers bzw. Monomerengemisch zu einem Polymer mit einer Glasübergangstemperatur ($T_{G2}$) von -60 bis +20°C, vorzugsweise -50 bis 0°C führen würde. Die Auswahl der Monomere bereitet dem Fachmann keine Probleme, weil die Glasübergangstemperatur von Emulsionspolymeren nach der Gleichung

$$\frac{1}{T_G} = \sum_{n=1}^{n=x} \frac{W_n}{T_{Gn}}$$

$T_G$ = Glasübergangstemperatur des Copolymers in °K

$W_n$ = Gewichtsanteil des n-ten Monomers

$T_{Gn}$ = Glasübergangstemperatur des Homopolymers aus dem n-ten Monomer

x = Anzahl der verschiedenen Monomeren

näherungsweise berechnet werden kann.

Bei der Herstellung von Emulsionspolymeren nach dem zwei-Stufen-Verfahren ist es bevorzugt, in der ersten Stufe wie oben beschrieben unter Einsatz einer Voremulsion zu arbeiten und in der zweiten Stufe das Monomerengemisch in Substanz, das heißt ohne Wasser zuzugeben und den Initiator getrennt, aber parallel dazu zuzugeben.

Das Mengenverhältnis zwischen den Monomeren und dem Wasser kann so ausgewählt werden, daß die resultierende Dispersion einen Feststoffgehalt von 30 bis 60 Gew.-%, vorzugsweise 35 bis 50 Gew.-% aufweist.

Als Emulgator wird vorzugsweise ein anionischer Emulgator allein oder im Gemisch eingesetzt.

Beispiele für anionische Emulgatoren sind die Alkalisalze von Schwefelsäurehalbestern von Alkylphenolen oder Alkoholen, ferner die Schwefelsäurehalbester von ethoxylierten Alkylphenolen oder ethoxylierten Alkoholen, vorzugsweise die Alkalisalze oder Ammoniumsalze des Schwefelsäurehalbesters eines mit 4 - 5 Mol Ethylenoxid pro Mol umgesetzten Nonylphenols, Alkyl- oder Arylsulfonat, Natriumlaurylsulfat, Natriumlaurylethoxylatsulfat und sekundäre Natriumalkansulfonate, deren Kohlenstoffkette 8 - 20 Kohlenstoffatome enthält. Die Menge des anionischen Emulgators beträgt 0,1 bis 5,0 Gew.-%, bezogen auf die Monomeren, vorzugsweise 0,5 - 3,0 Gew.-%. Ferner kann zur Erhöhung der Stabilität der wäßrigen Dispersionen zusätzlich ein nichtionischer Emulgator vom Typ eines ethoxylierten Alkylphenols oder Fettalkohols, z.B. ein Additionsprodukt von 1 Mol Nonylphenol und 4 - 30 Mol Ethylenoxid in Mischung mit dem anionischen Emulgator eingesetzt werden.

Als radikalbildender Initiator wird vorzugsweise eine Peroxidverbindung eingesetzt. Der Initiator ist wasserlöslich oder monomerlöslich. Vorzugsweise wird ein wasserlöslicher Initiator verwendet.

Als Initiatoren eignen sich die üblichen anorganischen Perverbindungen, wie Ammoniumperoxodisulfat, Kaliumperoxodisulfat, Ammonium- oder Alkalimetallperoxodisulfat und organische Peroxide, wie z.B. Benzoylperoxid, organische Perester, wie Perisopivalat, zum Teil in Kombination mit Reduktionsmitteln, wie Natriumdisulfit, Hydrazin, Hydroxylamin und katalytischen Mengen Beschleuniger, wie Eisen-, Kobalt-, Cer- und Vanadylsalze, vorzugsweise Alkali- bzw. Ammoniumperoxodisulfate. Es können auch die Redox-Initiatorsysteme, die in der EP-A-107300 offenbart werden, eingesetzt werden.

Es ist erfindungswesentlich, daß die zur Herstellung der in den erfindungsgemäß eingesetzten Basislacken enthaltenen Emulsionspolymere notwendige Emulsionspolymerisation in Gegenwart des Umsetzungsproduktes (A) durchgeführt wird.

Das Umsetzungsprodukt (A) ist erhältlich, indem

(i) ein Butadienhomo- oder copolymer

(ii) mindestens eine Fettsäure eines trocknenden Öles oder mindestens ein trocknendes Öl oder eine Mischung aus mindestens einer Fettsäure eines trocknenden Öles und mindestens einem trocknenden Öl und

(iii) Maleinsäureanhydrid

in einem Massenverhältnis von (i) : (ii) : (iii) = 1,0 : 0,1 bis 0,6 : 0,1 bis 0,6, vorzugsweise 1,0 : 0,2 bis 0,4 : 0,2 bis 0,4, besonders bevorzugt 1,0 : 0,2 bis 0,3 : 0,2 bis 0,3 umgesetzt werden und das Reaktionsprodukt nach Zugabe einer basischen wäßrigen Lösung in eine wäßrige Dispersion überführt wird.

Das als Komponente (i) eingesetzte Butadienhomo- oder Copolymer hat ein zahlenmittleres Molekulargewicht von 500 bis 8000, vorzugsweise 1000 bis 3000. Als Komponente (i) wird vorzugsweise ein Butadienhomopolymer eingesetzt. Als Komponente (i) wird besonders bevorzugt ein Butadienhomopolymer eingesetzt, das etwa 30 Prozent 1,2 Strukturen, 40 bis 50 Prozent 1,4-trans- und 20 bis 30 Prozent 1,4-cis Strukturen enthält.

Als Komponente (i) einsetzbare Butadiencopolymere können als Comonomere Alkylmethacrylate und Alkylacrylate mit 1 bis 12 Kohlenstoffatomen im Alkylrest wie z.B. Methylacrylat, Methylmethacrylat, Ethylacrylat, Ethylmethacrylat, Butylacrylat und Butylmethacrylat sowie Acrylnitril, Methacrylnitril oder Styrol enthalten.

Als Komponente (i) können auch Butadienhomo- oder copolymere eingesetzt werden, die funktionelle Gruppen wie z.B. Hydroxyl- oder Carboxylgruppen enthalten.

Als Komponente (ii) wird mindestens eine Fettsäure eines trocknenden Öles und oder mindestens ein trocknendes Öl eingesetzt. Beispiele für Fettsäuren trocknender Öle sind Ölsäure, Linolsäure, Linolensäure, Öleostearinsäure, Ricinolsäure, dehydratisierte Ricinolsäure. Es können auch synthetische Gemische derartiger Fettsäuren von trocknenden Ölen eingesetzt werden. Ein bevorzugtes Gemisch besteht aus Ölsäure, Linolsäure und konjugierter Linolsäure. Beispiele für trocknende Öle sind Sojaöl, dehydratisiertes Ricinusöl, Leinsamenöl, Tungöl, Safloröl und Sonnenblumenöl.

Als Komponente (iii) wird Maleinsäureanhydrid eingesetzt.

Die Umsetzung der Komponenten (i), (ii) und (iii) wird vorzugsweise so durchgeführt, daß in einer ersten Stufe die Komponenten (i) und (ii) bei einer Temperatur von 100 bis 200°C, vorzugsweise 150 bis 200°C miteinander umgesetzt werden und anschließend - vorzugsweise unter Mitverwendung eines Lösemittels, wie z.B. Methylisobutylketon - in einer zweiten Stufe vorzugsweise bei 80 bis 120°C mit Maleinsäureanhydrid umgesetzt wird. Die Umsetzung mit Maleinsäureanhydrid kann z.B. mit phosphoriger Säure katalysiert werden. Das so erhaltene Reaktionsprodukt wird schließlich nach Zugabe einer basischen wäßrigen Lösung (vorzugsweise einer Lösung von Ammoniak oder eines oder mehrerer organischer Amine in Wasser) in eine wäßrige Dispersion überführt. Nach Zugabe der basischen wäßrigen Lösung werden die vom Maleinsäureanhydrid stammenden Säureanhydridgruppen hydrolysiert und zumindest teilweise in Carboxylatgruppen überführt. Dadurch kann das aus (i), (ii) und (iii) hergestellte Umsetzungsprodukt (A) in Wasser stabil dispergiert werden. Die so erhaltene wäßrige Dispersion kann bei der Herstellung des Emulsionspolymeren als Vorlage eingesetzt werden. Sie kann auch zu der aus Wasser, Emulgator und Initiator bestehenden Vorlage gegeben werden. Sie kann auch zu der aus Wasser, Emulgator und Initiator bestehenden Vorlage gegeben werden. Es ist auch möglich, die das Umsetzungsprodukt (A) enthaltende wäßrige Dispersion zu der aus Wasser, Emulgator und Monomeren bestehenden Voremulsion zu geben. Die das Umsetzungsprodukt (A) enthaltene wäßrige Dispersion wird in einer solchen Menge eingesetzt, daß das Gewichtsverhältnis von Umsetzungsprodukt (A) zur Gesamtmenge an eingesetzten Monomeren (a) + (b) + (c) + (d) 0,01 bis 0,3 zu 1,0, vorzugsweise 0,01 bis 0,1 zu 1,0 beträgt, das heißt auf 1,0 Gewichtsteile Monomere werden 0,01 bis 0,3, vorzugsweise 0,01 bis 0,1 Gewichtsteile umsetzungsprodukt (A) eingesetzt.

Die in den erfindungsgemäß eingesetzten Lacken enthaltenen Emulsionspolymere werden unter Verwendung eines Monomerengemisches aus

(a) 45 bis 99 Gew.-%, vorzugsweise 75 bis 90 Gew.-% eines cycloaliphatischen oder aliphatischen, hydroxyl-, carboxyl- und sulfonsäuregruppenfreien Esters der Methacrylsäure oder Acrylsäure oder eines Gemisches aus solchen Estern

(b) 1 bis 20 Gew.-%, vorzugsweise 5 bis 15 Gew.-% eines mindestens eine Hydroxylgruppe pro Molekül tragenden ethylenisch ungesättigten Monomers oder eines Gemisches aus solchen Monomeren

(c) 0 bis 10 Gew.-%, vorzugsweise 2 bis 6 Gew.-% eines mindestens eine Carboxyl- oder mindestens eine Sulfonsäuregruppe pro Molekül tragenden ethylenisch ungesättigten Monomers oder eines Gemisches aus solchen Monomeren und

(d) 0 bis 25 Gew.-%, vorzugsweise 2 bis 15 Gew.-%, eines weiteren, von (a), (b) und (c) verschiedenen ethylenisch ungesättigten Monomers oder eines Gemisches aus solchen Monomeren,

hergestellt, wobei die Summe der Gewichtsanteile von (a), (b), (c) und (d) stets 100 Gew.-% ergibt.

Als Komponente (a) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl, Stearyl- und Laurylacrylat und -methacrylat oder Gemische aus diesen Monomeren.

Als Komponente (b) können z.B. eingesetzt werden: Hydroxyalkylester der Acrylsäure, Methacrylsäure oder einer anderen $\alpha,\beta$-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (b) werden vorzugsweise Hydroxyalkylester der Acrylsäure und Methacrylsäure, in denen die Hydroxyalkylgruppe bis zu 4 Kohlenstoffatome enthält oder Mischungen aus diesen Hydroxyalkylestern eingesetzt. Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat oder 4-Hydroxybutylmethacrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül können auch eingesetzt werden.

Als Komponente (c) werden vorzugsweise Acrylsäure und/oder Methacrylsäure und/oder Acrylamidomethylpropansulfonsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (d) können z.B. eingesetzt werden: vinylaromatische Kohlenwasserstoffe, wie Styrol, $\alpha$-Alkylstyrol und Vinyltoluol, Acryl- und Methacrylamid, Acryl- und Methacrylnitril sowie Furfurylacrylat und Furfurylmethacrylat. Als Komponente (d) wird vorzugsweise Furfurylacrylat, Furfurylmethacrylat, eine Mischung aus Furfurylacrylat und Furfurylmethacrylat oder eine Mischung aus Furfurylacrylat und/oder Furfurylmethacrylat und weiteren, von (a), (b) und (c) verschiedenen ethylenisch ungesättigten Monomeren eingesetzt.

Emulsionspolymere, die unter Verwendung einer Komponente (d), die soviel Furfurylacrylat und/oder Furfurylmethacrylat, vorzugsweise Furfurylmethacrylat enthält, daß der Anteil an Furfurylacrylat und/oder Furfurylmethacrylat bezogen auf die Gesamtmenge an eingesetzten Monomeren 0,25 bis 10, vorzugsweise 1,0 bis 9,0, besonders bevorzugt 2,0 bis 7,0 Gew.-% beträgt, hergestellt worden sind, sind besonders bevorzugt. Mit Basislacken, die derartige Emulsionspolymere enthalten, können Zweischichtlackierungen mit besonders gutem optischen Eindruck, insbesondere mit besonders gutem Metalleffekt erhalten werden.

Die in den erfindungsgemäß eingesetzten Basislacken enthaltenen Emulsionspolymere sollten ein zahlenmittleres Molekulargewicht (Bestimmung: gelpermeationschromatographisch mit Polystyrol als Standard) von 200.000 bis 2.000.000, vorzugsweise 300.000 bis 1.500.000 aufweisen. Die Hydroxylzahl der Emulsionspolymere sollte vorzugsweise zwischen 2 und 100 liegen.

Dem Fachmann ist bekannt, wie er die Reaktionsbedingungen während der Emulsionspolymerisation zu wählen hat, damit er Emulsionspolymere erhält, die die oben angegebenen zahlenmittleren Molekulargewichte aufweisen (vgl. z.B. Chemie, Physik und Technologie der Kunststoffe in Einzeldarstellungen, Dispersionen synthetischer Hochpolymerer, Teil 1 von F. Hölscher, Springer Verlag, Berlin, Heidelberg, New York, 1969).

Die erfindungsgemäß eingesetzten Basislacke können neben den oben beschriebenen Emulsionspolymeren noch weitere Bindemittelbestandteile, wie z.B. wasserverdünnbare Polyesterharze, wasserverdünnbare Polyacrylatharze, die nicht auf die oben beschriebene Art und Weise hergestellt worden sind, wasserverdünnbare Polyurethanharze (vgl.z.B. EP-A-89 497 und US-A-4,719,132), wasserverdünnbare Polyether usw. sowie Vernetzungsmittel, wie Aminoplastharze, insbesondere Melaminharze und blockierte Polyisocyanate enthalten. Beispiele für diese Bindemittelbestandteile und Vernetzungsmittel werden beispielsweise in der DE-A-38 41 540, EP-A-287 144, EP-A-38 127, EP-A-89 497, DE-A-36 28 124, EP-A-195931, US-A-4,719,132 und EP-A-256 540 beschrieben.

Als Pigmente können die erfindungsgemäß eingesetzten Basislacke alle für wäßrige Lacke geeigneten anorganischen oder organischen Pigmente oder Mischungen aus solchen anorganischen und/oder organischen Pigmenten enthalten. Als Beispiele für einsetzbare Pigmente werden Titandioxid, Eisenoxid, Ruß, Metallpigmente, insbesondere Aluminiumpigmente und Perlglanz- bzw. Interferenzpigmente genannt. Die Basislacke enthalten vorzugsweise Metallpigmente, insbesondere Aluminiumpigmente allein oder in Kombination mit nichtmetallischen Pigmenten.

Die erfindungsgemäß eingesetzten Basislacke können außerdem vernetzte polymere Mikroteilchen (vgl. z.B. EP-A-38 127) und/oder übliche rheologiesteuernde anorganische oder organische Additive enthalten. So wirken als Verdicker beispielsweise wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder Polyacrylate. Besonders bevorzugt werden carboxylgruppenhaltige Polyacrylat-Copolymere mit einer Säurezahl von 60 bis 780, bevorzugt 200 bis 500.

In Stufe (3) des erfindungsgemäßen Verfahrens können im Prinzip alle für die Herstellung von Zweischichtlackierungen des in Rede stehenden Typs geeigneten transparenten Decklacke (Klarlacke) eingesetzt werden. Die transparenten Decklacke können konventionell, d.h. ausschließlich organische Lösemittel enthaltende Lacke, wäßrige Lacke oder Pulverlacke sein.

Die Erfindung wird in den folgenden Beispielen näher erläutert. Alle Angaben über Teile und Prozentsätze sind Gewichtsangaben, falls nicht ausdrücklich etwas anderes festgestellt wird.

A) Herstellung einer wäßrigen Dispersion eines Emulsionspolymeren gemäß DE-A 38 41 540 (vgl. DE-A-38 41 540, Seite 8, Emulsionspolymerdispersion 1)

In einem zylindrischen Glasdoppelwandgefäß mit Rührer, Rückflußkühler, rührbarem Zulaufgefäß, Tropftrichter und Thermometer werden 1344 g deionisiertes Wasser und 12 g einer 30 %igen wäßrigen Lösung des Ammoniumsalzes des Penta(ethylenglykol)-nonylphenylethersulfates (Fenopon® EP 110 der GAF Corp., Emulgator 1) vorgelegt und 82°C aufgeheizt. Im rührbaren Zulaufgefäß wird aus 720 g deionisiertem Wasser, 24 g Emulgator 1, 10,8 g Acrylamid, 864 g Methylmethacrylat und 216 g n-Butylmethacrylat eine Emulsion hergestellt. 30 Gew.-% dieser Emulsion werden zur Vorlage gegeben. Dann werden 28 Gew.-% einer Lösung von 3,1 g Ammoniumperoxodisulfat (ASP) in 188 g deionisiertem Wasser innerhalb von 5 Minuten zugetropft. Es tritt eine exotherme Reaktion ein. Die Reaktionstemperatur wird zwischen 82 und 88°C gehalten. 15 Minuten nach Beendigung der Zugabe der Ammoniumperoxodisulfatlösung werden die restlichen 70 Gew.-% der Emulsion zusammen mit den restlichen 72 Gew.-% der Ammoniumperoxodisulfatlösung innerhalb einer Stunde zugegeben, wobei die Temperatur bei 85 °C gehalten wird. Danach wird auf 82°C abgekühlt und innerhalb von 2 Stunden werden eine Mischung von 842 g n-Butylacrylat, 108 g Hydroxypropylmethacrylat, 43 g Methylmethacrylat, 43,2 g Methacrylsäure, 32,4 g Acrylamid und 5,4 g Eicosa(ethylenglykol)nonylphenylether (Antarox® CO 850 der GAF Corp., Emulgator 2) sowie 343 g deionisiertes Wasser zugegeben. Nach Beendigung der Zugaben wird die Reaktionsmischung noch für 1,5 Stunden bei 85°C gehalten. Danach wird abgekühlt und die Dispersion über ein Gewebe mit 30 μm Maschenweite gegeben. Man erhält eine feinteilige Dispersion mit einem nichtflüchtigen Anteil von 45 Gew.-%, einem pH-Wert von 3,4, einer Säurezahl von 13 und einer OH-Zahl von 20.

B) Herstellung einer wäßrigen Dispersion des Umsetzungsproduktes (A)

721,5 g Lithene P4-2000 (Butadienhomopolymer, Hersteller: Metallgesellschaft AG) und 180,4 g Lackleinöl werden in einen Stahlkessel gegeben und auf 220°C aufgeheizt. Sobald die Reaktionsmischung eine Viskosität von 9,2 dPas erreicht hat wird auf 105°C abgekühlt. Dann werden 0,72 g phosphorige Säure, 28,4 g Methylisobutylketon und 184,7 g Maleinsäureanhydrid zugegeben. Anschließend wird solange auf 190°C unter Rückfluß erhitzt bis der Gehalt an freiem Maleinsäureanhydrid unter 0,02 Gew.-% liegt. Das so erhaltene Reaktionsprodukt wird in einer Lösung von 38,9 g Ammoniak in 5354,4 g Wasser in der Wärme dispergiert. Die so erhaltene Dispersion wird auf einen Feststoffgehalt von 17,5 Gew.-% eingestellt.

C) Herstellung einer wäßrigen Dispersion eines Emulsionspolymeren gemäß der vorliegenden Erfindung

Es wird wie unter A) beschrieben verfahren, mit dem einzigen Unterschied, daß die im rührbaren Zulaufgefäß hergestellte Emulsion unter Verwendung von 802 g Methylmethacrylat (statt 864 g) und 62 g der gemäß B) hergestellten Dispersion hergestellt wird.

D) Herstellung einer wäßrigen Dispersion eines Emulsionspolymeren gemäß der vorliegenden Erfindung unter Mitverwendung von Furfurylmethacrylat

Es wird wie unter C) beschrieben verfahren, mit dem einzigen Unterschied, daß in der zweiten Stufe anstelle von 842 g n-Butylacrylat 792 g n-Butylacrylat und 50 g Furfurylmethacrylat (FMA, Röhm GmbH, CAS 3454-28-2) eingesetzt werden.

E) Herstellung eines wäßrigen Basislackes unter Verwendung des Polyacrylatharzes gemäß A)

16,4 g Butylglykol, 3,4 g eines handelsüblichen Melamin-Formaldehydharzes (Cymel® 301), 2,9 g Polypropylenglykol (zahlenmittleres Molekulargewicht = 420) und 6,6 g einer Aluminiumbronze gemäß DE-OS-36 36 183 (Aluminiumgehalt: 65 Gew.-%) werden mit einem Schnellrührer 15 Minuten (300 - 500 U/min.) lang gerührt. Es wird eine Mischung 1 erhalten.

33,5 g der gemäß A) hergestellten Dispersion werden mit 20,3 g deionisiertem Wasser vermischt und mit einer 5 %igen wäßrigen Dimethylethanolaminlösung auf einen pH-Wert von 7,7 eingestellt. Die Mischung wird 10 Minuten gerührt und anschließend mit 17,0 g einer 3,5 %igen Lösung eines handelsüblichen Polyacrylsäureverdickers (Viscalex® HV/30 der Allied Colloids, pH-Wert: 8,0) versetzt und weitere 10 Minuten gerührt. Es wird die Mischung 2 erhalten.

Die Mischungen 1 und 2 werden für 30 Minuten bei 800 - 1000 U/min. gemischt. Der so erhaltene Basislack wird mit einer 5 %igen wäßrigen Dimethylethanolaminlösung auf einen pH-Wert von 7,7 und mit deionisiertem Wasser auf einen Feststoffgehalt von 20 Gew.-% eingestellt.

F) Herstellung von erfindungsgemäßen Basislacken

Es wird wie unter E) beschrieben verfahren. Anstelle der gemäß A) hergestellten Dispersion werden die gemäß C) und D) hergestellten Dispersionen eingesetzt.

G) Herstellung von Zweischichtlackierungen

Die gemäß E) und F) hergestellten Basislacke werden auf bekannte Art und Weise auf mit einer handelsüblichen Elektrotauchlackierung und einem handelsüblichen Füller beschichtete phosphatierte Stahlbleche (Bonder 132) gespritzt, nach einer Ablüftzeit von 10 Minuten bei 80°C mit einem handelsüblichen Klarlack überlackiert und 20 Minuten bei 140°C eingebrannt.

Für den Metalleffekt der mit dem gemäß E) hergestellten Basislack hergestellten Zweischichtlackierung wird eine Maßzahl von 65 und für den Metalleffekt der mit den gemäß F) hergestellten Basislacken hergestellten Zweischichtlackierungen werden Maßzahlen von 70 (Lack enthaltend Dispersion gemäß C)) bzw. 76 (Lack enthaltend Dispersion gemäß D)) ermittelt.

Die Maßzahlen für den Metalleffekt werden wie folgt bestimmt:

1. Messung der spektralen Reflexion mittels Goniospektralphotometer Datacolor/Zeiss MCS 211/MMK 111 unter folgenden Meßgeometrien

| Geometrieklasse | Beleuchtung | Beobachtung |
|---|---|---|
| 25° | 45° | - 20° |
| 70° | 45° | 25° |

2. Bestimmung der CIEL\*a\*b\* 1976 Farbkoordinaten nach DIN 5033 und DIN 6174 für den 10° Normalbeobachter und Normlichtart $D_{65}$.

3. Bestimmung der Maßzahl für den Metalleffekt nach der Beziehung: Maßzahl = $((L_{25°} - L_{70°}) 50) : L_{70°}$.

**Patentansprüche**

1. Verfahren zur Herstellung einer zweischichtigen Lackierung auf einer Substratoberfläche, bei dem

(1) ein pigmentierter wäßriger Basislack, der ein wasserverdünnbares Emulsionspolymer als Bindemittel enthält, auf die Substratoberfläche aufgebracht wird

(2) aus dem in Stufe (1) aufgebrachten Basislack ein Polymerfilm gebildet wird

(3) auf der so erhaltenen Basisschicht ein transparenter Decklack aufgebracht wird und anschließend

(4) Basisschicht und Deckschicht zusammen eingebrannt werden,

dadurch gekennzeichnet, daß das im Basislack enthaltene Emulsionspolymer erhältlich ist, indem ein Gemisch aus

(a) 45 bis 99 Gew.-% eines cycloaliphatischen oder aliphatischen, hydroxyl-, carboxyl- und sulfonsäuregruppenfreien Esters der Methacrylsäure oder Acrylsäure oder eines Gemisches aus solchen Estern

(b) 1 bis 20 Gew.-% eines mindestens eine Hydroxylgruppe pro Molekül tragenden ethylenisch ungesättigten Monomers oder eines Gemisches aus solchen Monomeren

(c) 0 bis 10 Gew.-% eines mindestens eine Carboxyl- oder mindestens eine Sulfonsäuregruppe pro Molekül tragenden ethylenisch ungesättigten Monomers oder eines Gemisches aus solchen Monomeren und

(d) 0 bis 25 Gew.-% eines weiteren, von (a), (b) und (c) verschiedenen ethylenisch ungesättigten Monomers oder eines Gemisches aus solchen Monomeren,

wobei die Summe der Gewichtsanteile von (a), (b), (c) und (d) stets 100 Gew.-% ergibt, in wäßriger Phase in Gegenwart eines Umsetzungsproduktes (A) und eines oder mehrerer Emulgatoren radikalisch polymerisiert wird, wobei das Umsetzungsprodukt (A) erhältlich ist, indem

(i) ein Butadienhomo- oder copolymer

(ii) mindestens eine Fettsäure eines trocknenden Öles und/oder mindestens ein trocknendes Öl und

(iii) Maleinsäureanhydrid

in einem Massenverhältnis von (i) : (ii) : (iii) = 1,0 : 0,1 bis 0,6 : 0,1 bis 0,6 umgesetzt werden und das Reaktionsprodukt nach Zugabe einer basischen wäßrigen Lösung in eine wäßrige Dispersion überführt wird.

2. Wäßrige Lacke, enthaltend ein Emulsionspolymer als Bindemittel, dadurch gekennzeichnet, daß das Emulsionspolymer erhältlich ist, indem ein Gemisch aus

(a) 45 bis 99 Gew.-% eines cycloaliphatischen oder aliphatischen, hydroxyl-, carboxyl- und sulfonsäuregruppenfreien Esters der Methacrylsäure oder Acrylsäure oder eines Gemisches aus solchen Estern

(b) 1 bis 20 Gew.-% eines mindestens eine Hydroxylgruppe pro Molekül tragenden ethylenisch ungesättigten Monomers oder eines Gemisches aus solchen Monomeren

(c) 0 bis 10 Gew.-% eines mindestens eine Carboxyl- oder mindestens eine Sulfonsäuregruppe pro Molekül tragenden ethylenisch ungesättigten Monomers oder eines Gemisches aus solchen Monomeren und

(d) 0 bis 25 Gew.-% eines weiteren, von (a), (b) und (c) verschiedenen ethylenisch ungesättigten Monomers oder eines Gemisches aus solchen Monomeren,

wobei die Summe der Gewichtsanteile von (a), (b), (c) und (d) stets 100 Gew.-% ergibt, in wäßriger Phase in Gegenwart eines Umsetzungsproduktes (A) und eines oder mehrerer Emulgatoren radikalisch polymerisiert wird, wobei das Umsetzungsprodukt (A) erhältlich ist, indem

(i) ein Butadienhomo- oder copolymer

(ii) mindestens eine Fettsäure eines trocknenden Öles und/oder mindestens ein trocknendes Öl und

(iii) Maleinsäureanhydrid

in einem Massenverhältnis von (i) : (ii) : (iii) = 1,0 : 0,1 bis 0,6 : 0,1 bis 0,6 umgesetzt werden und das Reaktionsprodukt nach Zugabe einer basischen wäßrigen Lösung in eine wäßrige Dispersion überführt wird.

3. Verfahren nach Anspruch 1, dadurch gekennzeichnet, daß der in Stufe (1) aufgebrachte Basislack ein Metallpigment, vorzugsweise ein Aluminiumpigment enthält.

4. Verfahren oder Lacke nach einem der Ansprüche 1 bis 3, dadurch gekennzeichnet, daß als Komponente (d) Furfurylacrylat, Furfurylmethacrylat, eine Mischung aus Furfurylacrylat und Furfurylmethacrylat oder eine Mischung aus Furfurylacrylat und/oder Furfurylmethacrylat und weiteren, von (a), (b) und (c) verschiedenen ethylenisch ungesättigten Monomeren eingesetzt wird.

5. Verfahren oder Lacke nach einem der Ansprüche 1 bis 4, dadurch gekennzeichnet, daß das Emulsionspolymer ein zahlenmittleres Molekulargewicht von 200.000 bis 2.000.000 und eine Hydroxylzahl von 2 bis 100 aufweist.

6. Verfahren oder Lacke nach einem der Ansprüche 1 bis 5, dadurch gekennzeichnet, daß das Emulsionspolymer erhältlich ist, indem in einer ersten Stufe ein Gemisch aus

(a1) 10 bis 90 Gew.-%, vorzugsweise 35 bis 75 Gew.-% der insgesamt einzusetzenden Menge an Komponente (a)

(b1) 0 bis 90 Gew.-%, vorzugsweise 0 Gew.-% der insgesamt einzusetzenden Menge an Komponente (b)

(c1) 0 bis 90 Gew.-%, vorzugsweise 0 Gew.-% der insgesamt einzusetzenden Menge an Komponente (c) und

(d1) 0 bis 90 Gew.-%, vorzugsweise 25 bis 65 Gew.-% der insgesamt einzusetzenden Menge an Komponente (d)

in wäßriger Phase in Gegenwart des Umsetzungsproduktes (A) und eines oder mehrerer Emulgatoren radikalisch polymerisiert und nachdem mindestens 80 Gew.-% der aus (a1), (b1), (c1) und (d1) bestehenden Mischung umgesetzt worden sind in einer zweiten Stufe ein Gemisch aus

(a2) 90 bis 10 Gew.-%, vorzugsweise 75 bis 35 Gew.-% der insgesamt einzusetzenden Menge an Komponente (a)

(b2) 100 bis 10 Gew.-%, vorzugsweise 100 Gew.-% der insgesamt einzusetzenden Menge an Komponente (b)

(c2) 100 bis 10 Gew.-%, vorzugsweise 100 Gew.-% der insgesamt einzusetzenden Menge an Komponente (c) und

(d2) 100 bis 10 Gew.-%, vorzugsweise 65 bis 25 Gew.-% der insgesamt einzusetzenden Menge an Komponente (d)

in wäßriger Phase in Gegenwart des in der ersten Stufe erhaltenen Polymers radikalisch polymerisiert wird.

7. Verfahren oder Lacke nach einem der Ansprüche 1 bis 6, dadurch gekennzeichnet, daß als Komponente (i) ein Butadienhomopolymer mit einem zahlenmittleren Molekulargewicht von 500 bis 8000, vorzugsweise 1000 bis 3000 eingesetzt wird.

8. Verfahren oder Lacke nach einem der Ansprüche 1 bis 7, dadurch gekennzeichnet, daß die Komponenten (i), (ii) und (iii) in einem Massenverhältnis von (i) : (ii) : (iii) = 1,0 : 0,2 bis 0,4 : 0,2 bis 0,4 vorzugsweise 1,0 : 0,2 bis 0,3 : 0,2 bis 0,3 umgesetzt werden.

9. Verfahren oder Lacke nach einem der Ansprüche 1 bis 8, dadurch gekennzeichnet, daß das Gewichtsverhältnis von Umsetzungsprodukt (A) zur Gesamtmenge an eingesetzten Monomeren (a) + (b) + (c) + (d) 0,01 bis 0,3 zu 1,0, vorzugsweise 0,01 bis 0,1 zu 1,0 beträgt.

10. Verwendung der wäßrigen Lacke nach einem der Ansprüche 2 und 4 bis 9 zur Herstellung von zweischichtigen Lackierungen, die nach einem Verfahren gemäß Anspruch 1 herstellbar sind.

**Claims**

1. Process for the production of a two-coat finish on a substrate surface, in which

   (1) a pigmented aqueous basecoat containing a water-dilutable emulsion polymer as binder is applied to the substrate surface,
   (2) a polymer film is formed from the basecoat applied in stage (1),
   (3) a transparent topcoat is applied to the basecoat thus obtained, and then
   (4) basecoat and topcoat are baked together,

   characterized in that the emulsion polymer contained in the basecoat can be obtained by subjecting a mixture of

   (a) 45 to 99% by weight of a cycloaliphatic or aliphatic ester of methacrylic acid or acrylic acid which is free from hydroxyl, carboxyl and sulphonic acid groups, or of a mixture of such esters,
   (b) 1 to 20% by weight of an ethylenically unsaturated monomer which carries at least one hydroxyl group per molecule, or of a mixture of such monomers,
   (c) 0 to 10% by weight of an ethylenically unsaturated monomer which carries at least one carboxyl or at least one sulphonic acid group per molecule, or of a mixture of such monomers, and
   (d) 0 to 25% by weight of a further ethylenically unsaturated monomer which is different from (a), (b) and (c), or of a mixture of such monomers,

   the sum of the proportions by weight of (a), (b), (c) and (d) always being 100% by weight, to free-radical polymerization in the aqueous phase in the presence of a reaction product (A) and of one or more emulsifiers, the reaction product (A) being obtainable by reacting

   (i) a butadiene homo- or copolymer,
   (ii) at least one fatty acid of a drying oil and/or at least one drying oil, and
   (iii) maleic anhydride

   in a mass ratio of (i):(ii):(iii) = 1.0:0.1 to 0.6:0.1 to 0.6 and, after adding a basic aqueous solution, converting the reaction product to an aqueous dispersion.

2. Aqueous paints containing an emulsion polymer as binder, characterized in that the emulsion polymer is obtainable by subjecting a mixture of

   (a) 45 to 99% by weight of a cycloaliphatic or aliphatic ester of methacrylic acid or acrylic acid which is free from hydroxyl, carboxyl and sulphonic acid groups, or of a mixture of such esters,
   (b) 1 to 20% by weight of an ethylenically unsaturated monomer which carries at least one hydroxyl group per molecule, or of a mixture of such monomers,
   (c) 0 to 10% by weight of an ethylenically unsaturated monomer which carries at least one carboxyl or at least one sulphonic acid group per molecule, or of a mixture of such monomers, and
   (d) 0 to 25% by weight of a further ethylenically unsaturated monomer which is different from (a), (b) and (c), or of a mixture of such monomers,

   the sum of the proportions by weight of (a), (b), (c) and (d) always being 100% by weight, to free-radical polymerization in the aqueous phase in the presence of a reaction product (A) and of one or more emulsifiers, the reaction product (A) being obtainable by reacting

    (i) a butadiene homo- or copolymer,
    (ii) at least one fatty acid of a drying oil and/or at least one drying oil, and
    (iii) maleic anhydride

in a mass ratio of (i):(ii):(iii) = 1.0:0.1 to 0.6:0.1 to 0.6 and, after adding a basic aqueous solution, converting the reaction product to an aqueous dispersion.

3. Process according to Claim 1, characterized in that the basecoat applied in stage (i) contains a metallic pigment, preferably an aluminium pigment.

4. Process or paints according to one of Claims 1 to 3, characterized in that, as component (d), furfuryl acrylate, furfuryl methacrylate, a mixture of furfuryl acrylate and furfuryl methacrylate or a mixture of furfuryl acrylate and/or furfuryl methacrylate and further ethylenically unsaturated monomers different from (a), (b) and (c) is employed.

5. Process or paints according to one of Claims 1 to 4, characterized in that the emulsion polymer has a number-average molecular weight of 200,000 to 2,000,000 and a hydroxyl number of 2 to 100.

6. Process or paints according to one of Claims 1 to 5, characterized in that the emulsion polymer can be obtained by subjecting in a first stage a mixture of

    (a1) 10 to 90% by weight, preferably 35 to 75% by weight, of the total amount of component (a) to be employed,
    (b1) 0 to 90% by weight, preferably 0% by weight, of the total amount of component (b) to be employed,
    (c1) 0 to 90% by weight, preferably 0% by weight, of the total amount of component (c) to be employed, and
    (d1) 0 to 90% by weight, preferably 25 to 65% by weight, of the total amount of component (d) to be employed

to free-radical polymerization in the aqueous phase in the presence of the reaction product (A) and of one or more emulsifiers, and, after at least 80% by weight of the mixture comprising (a1), (b1), (c1) and (d1) have been reacted, subjecting in a second stage a mixture of

    (a2) 90 to 10% by weight, preferably 75 to 35% by weight, of the total amount of component (a) to be employed,
    (b2) 100 to 10% by weight, preferably 100% by weight, of the total amount of component (b) to be employed,
    (c2) 100 to 10% by weight, preferably 100% by weight, of the total amount of component (c) to be employed, and
    (d2) 100 to 10% by weight, preferably 65 to 25% by weight, of the total amount of component (d) to be employed

to free-radical polymerization in the aqueous phase in the presence of the polymer obtained in the first stage.

7. Process or paints according to one of Claims 1 to 6, characterized in that, as component (i), a butadiene homopolymer having a number-average molecular weight of 500 to 8000, preferably 1000 to 3000, is employed.

8. Process or paints according to one of Claims 1 to 7, characterized in that components (i), (ii) and (iii) are reacted in a mass ratio of (i):(ii):(iii) = 1.0:0.2 to 0.4:0.2 to 0.4, preferably 1.0:0.2 to 0.3:0.2 to 0.3.

9. Process or paints according to one of Claims 1 to 8, characterized in that the weight ratio of reaction product (A) to the total amount of monomers (a) + (b) + (c) + (d) employed is 0.01 to 0.3:1.0, preferably 0.01 to 0.1:1.0.

10. Use of the aqueous paints according to one of Claims 2 and 4 to 9 in the production of two-coat finishes which can be produced by a process according to Claim 1.

**Revendications**

1. Procédé de préparation d'un laquage aqueux à deux couches sur une surface de substrat, lors duquel

    (1) l'on procède à l'application, sur la surface de substrat, d'une laque de base aqueuse pigmentée, qui contient, en tant que liant, un polymère d'émulsion hydrodiluable,

    (2) l'on forme un film de polymère à partir de la laque de base appliquée dans l'étape (1),

    (3) l'on procède à l'application, sur la couche de base ainsi obtenue, d'une laque de finition transparente et

    (4) l'on procède ensuite à la cuisson conjointe de la couche de base et de la couche de finition,

caractérisé en ce que l'on peut obtenir le polymère d'émulsion contenu dans la laque de base en procédant à la polymérisation radicalaire d'un mélange

(a) de 45 à 99 % en poids d'un ester de l'acide méthacrylique ou de l'acide acrylique, cycloaliphatique ou aliphatique, exempt de groupements hydroxyle, carboxyle et acide sulfonique ou d'un mélange de tels esters,

(b) de 1 à 20 % en poids d'au moins un monomère éthyléniquement insaturé, portant au moins un groupement hydroxyle par molécule, ou d'un mélange de tels monomères,

(c) de 0 à 10 % en poids d'au moins un monomère éthyléniquement insaturé, portant au moins un groupement carboxyle ou au moins un groupement acide sulfonique par molécule, ou d'un mélange de tels monomères, et

(d) de 0 à 25 % en poids d'un monomère supplémentaire éthyléniquement insaturé, différent de (a), (b) et (c) ou d'un mélange de tels monomères,

en phase aqueuse en présence d'un produit de réaction (A) et d'un ou de plusieurs émulsifiants, la somme des proportions en poids de (a), (b), (c) et (d) donnant à chaque fois 100 % en poids, le produit de réaction (A) pouvant être obtenu en ce que l'on fait réagir

(i) un homopolymère ou un copolymère de butadiène

(ii) au moins un acide gras d'une huile siccative et/ou au moins une huile siccative et

(iii) l'anhydride maléique

dans un rapport molaire de (i) : (ii) : (iii) = 1,0 : 0,1 à 0,6 : 0,1 à 0,6 et en ce que l'on procède à la conversion du produit de réaction, après addition d'une solution aqueuse basique, en une dispersion aqueuse.

2. Laque aqueuse, contenant un polymère d'émulsion en tant que liant, caractérisée en ce que l'on peut obtenir le polymère d'émulsion en procédant à la polymérisation radicalaire d'un mélange

(a) de 45 à 99 % en poids d'un ester de l'acide méthacrylique ou de l'acide acrylique, cycloaliphatique ou aliphatique, exempt de groupements hydroxyle, carboxyle et acide sulfonique ou d'un mélange de tels esters,

(b) de 1 à 20 % en poids d'au moins un monomère éthyléniquement insaturé, portant au moins un groupement hydroxyle par molécule, ou d'un mélange de tels monomères,

(c) de 0 à 10 % en poids d'au moins un monomère éthyléniquement insaturé portant au moins un groupement carboxyle ou au moins un groupement acide sulfonique par molécule, ou d'un mélange de tels monomères,

(d) de 0 à 25 % en poids d'un monomère supplémentaire éthyléniquement insaturé, différent de (a), (b) et (c) ou d'un mélange de tels monomères,

en phase aqueuse en présence d'un produit de réaction (A) et d'un ou de plusieurs émulsifiants, la somme des proportions en poids de (a), (b), (c) et (d) donnant à chaque fois 100 % en poids, le produit de réaction (A) pouvant être obtenu en ce que l'on fait réagir

(i) un homopolymère ou un copolymère de butadiène

(ii) au moins un acide gras d'une huile siccative et/ou au moins une huile siccative et

(iii) l'anhydride maléique

dans un rapport de masse de (i) : (ii) : (iii) = 1,0 : 0,1 à 0,6 : 0,1 à 0,6 et en ce que l'on procède à la conversion du produit de réaction, après addition d'une solution aqueuse basique, en une dispersion aqueuse.

3. Procédé selon la revendication 1, caractérisé en ce que la laque de base appliquée dans l'étape (1) contient un pigment métallique, de préférence un pigment d'aluminium.

4. Procédé ou laque selon l'une quelconque des revendications 1 à 3, caractérisé(e) en ce que l'on utilise en tant que composant (d) l'acrylate de furfuryle, le méthacrylate de furfuryle, un mélange d'acrylate de furfuryle et de méthacrylate de furfuryle ou un mélange d'acrylate de furfuryle et/ou de méthacrylate de furfuryle et de monomères supplémentaires éthyléniquement insaturés, différents de (a), (b), et (c).

5. Procédé où laque selon l'une quelconque des revendications 1 à 4, caractérisé(e) en ce que le polymère d'émulsion présente un poids moléculaire moyen au nombre de 200 000 à 2 000 000 et un indice hydroxyle de 2 à 100.

6. Procédé ou laque selon l'une quelconque des revendications 1 à 5, caractérisé(e) en ce que l'on peut obtenir le polymère d'émulsion en procédant dans une première étape à la polymérisation radicalaire d'un mélange

(a1) de 10 à 90 % en poids, de préférence de 35 à 75 % en poids de la quantité de composant (a) à utiliser en tout,

(b1) de 0 à 90 % en poids, de préférence de 0 % en poids de la quantité de composant (b) à utiliser en tout,

(c1) de 0 à 90 % en poids, de préférence de 0 % en poids de la quantité de composant (c) à utiliser en tout et

(d1) de 0 à 90 % en poids, de préférence de 25 à 65 % en poids de la quantité de composant (d) à utiliser en tout

en phase aqueuse en présence du produit de réaction (A) et d'un ou de plusieurs émulsifiants, et après avoir fait réagir au moins 80 % en poids du mélange se composant de (a1), (b1), (c1) et (d1), en procédant à la polymérisation radicalaire, dans une deuxième étape, d'un mélange

(a2) de 90 à 10 % en poids, de préférence de 75 à 35 % en poids de la quantité de composant a) à utiliser en tout,

(b2) de 100 à 10 % en poids, de préférence de 100 % en poids de la quantité de composant (b) à utiliser en tout,

(c2) de 100 à 10 % en poids, de préférence de 100 % en poids de la quantité de composant (c) à utiliser en tout et

(d2) de 100 à 10 % en poids, de préférence de 65 à 25 % en poids de la quantité de composant (d) à utiliser en tout

en phase aqueuse en présence du polymère obtenu dans la première étape.

7. Procédé ou laque selon l'une quelconque des revendications 1 à 6, caractérisé(e) en ce que l'on utilise en tant que composant (i) un homopolymère de butadiène ayant un poids moléculaire moyen au nombre de 500 à 8 000, de préférence de 1 000 à 3 000.

8. Procédé ou laque selon l'une quelconque des revendications 1 à 7, caractérisé(e) en ce que l'on fait réagir les composants (i), (ii), et (iii) dans une rapport de masse de (i) : (ii) : (iii) = 1,0 : 0,2 à 0,4 : 0,2 à 0,4, de préférence 1,0 : 0,2 à 0,3 : 0,2 à 0,3.

9. Procédé ou laque selon l'une quelconque des revendications 1 à 8, caractérisé(e) en ce que le rapport en poids du produit de réaction (A) à la quantité totale de monomères utilisés (a) + (b) + (c) + (d) est de 0,01 à 0,3 à 1,0, de préférence de 0,01 à 0,1 à 1,0.

10. Utilisation des laques aqueuses selon l'une quelconque des revendications 2 et 4 à 9' en vue de la préparation de laquages à deux couches, que l'on peut préparer conformément à un procédé selon la revendication 1.